# EUROPÄISCHE PATENTSCHRIFT

(11) **EP 0 639 215 B1**
(45) Veröffentlichungstag und Bekanntmachung des Hinweises auf die Patenterteilung: **08.05.1996**
(21) Anmeldenummer: 92904450.1
(22) Anmeldetag: 13.02.1992
(51) Int. Cl.: C10F 5/00, F01K 17/06

(54) **VERFAHREN ZUR TROCKNUNG WASSERHALTIGER FESTER BRENNSTOFFE, INSBESONDERE ROHBRAUNKOHLE**
PROCESS FOR DRYING HYDROUS SOLID FUELS, IN PARTICULAR RAW BROWN COAL
PROCEDE DE SECHAGE DE COMBUSTIBLES SOLIDES A TENEUR AQUEUSE, EN PARTICULIER LE LIGNITE BRUT

(30) Priorität: 15.02.1991 DE 4105129
(43) Veröffentlichungstag der Anmeldung: 22.02.1995
(73) Patentinhaber: VEAG VEREINIGTE ENERGIEWERKE AKTIENGESELLSCHAFT, D-12681 Berlin (DE)
(72) Erfinder: Krödel, Bernd Dr.oec., D-12627 Berlin (DE)
(74) Vertreter: Zinken-Sommer, Rainer
(86) Internationale Anmeldenummer: DE9200105
(87) Internationale Veröffentlichungsnummer: WO9214801

(56) Entgegenhaltungen:
- EP-A- 0 273 406
- WO-A-90/00219
- DD-A- 281 237
- US-A- 4 656 955

## Beschreibung

Die Erfindung betrifft ein Verfahren zur Trocknung wasserhaltiger fester Brennstoffe, insbesondere Rohbraunkohle, in einem Trocknungsbehälter einer Wärmeerzeugungsanlage.

Bekannt ist eine Anordnung zur Vollstrom-Rohkohletrocknung für Kondensationskraftwerke, wobei die Brüdenkondensationswärme vollständig ausgenutzt und weder eine Brüdenrückverdichtung noch eine separate elektrische Brüdenentstaubung stattfindet, wobei die Trocknung in einem mit Membranrohrwänden als Heizflächen versehenen und mit Anzapfdampf als Heizdampf von der Hauptturbine versorgten Schüttungsschacht durchgeführt und der dabei entstandene Brüden beim Austritt in den Brüdenkanal - also beim Verlassen des Trockners - mittels dampfabreinigbarer Filterwand entstaubt wird (DD-PS 281 237). In 281 237 wird die Brüdenenergie als Sekundärenergie vollständig nur durch Aufteilung in mehrere und qualitativ unterschiedliche Einsatzfälle genutzt, was eine aufwendige Einbindung in das Anlagengesamtkonzept bedingt. Außerdem ist diese Schaltungsanordnung ausschließlich auf einen Kraftwerksblock bezogen, der die Stromerzeugung nur im "reinen" Kondensationsbetrieb durchführt.

Der Erfindung liegt die Aufgabe zugrunde, eine deutliche Reduzierung der CO₂-Emission je Nutzleistungseinheit durch verringerten Einsatz fossiler Energieträger zu erreichen, wobei die Trocknungseinrichtungen für Rohbraunkohle so mit der Wärmeerzeugungsanlage verbunden werden, daß eine vollständige energetische Verwertung des Brüdens realisiert wird.

Dies wird erfindungsgemäß dadurch erreicht, daß der Trocknungsbehälter über einen eigenen Sattdampfkreislauf vom Heizkessel der Dampferzeugungsanlage direkt erhitzt, der entstaubte und unter Mitteldruck stehende Brüden auf eine Wärmeversorgungsschiene gegeben und das Brüdenkondensat nach dessen chemischer Aufbereitung zur Wasserversorgung eines Heizwerkes und/oder eines Heiznetzes eingesetzt wird.

Anhand eines Ausführungsbeispieles soll nachfolgend die Erfindung näher erläutert werden.

Dabei zeigt:

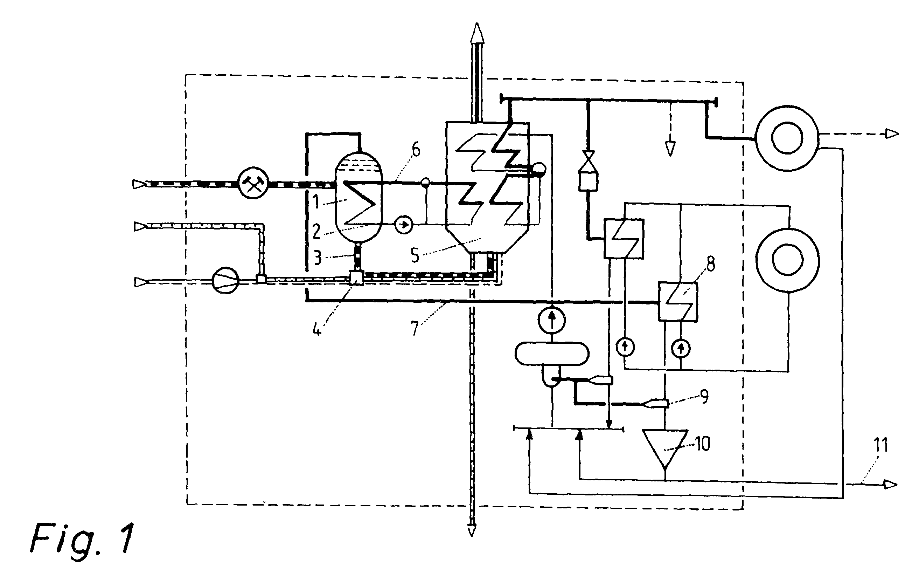

- Fig.1 -: ein Heizhaus für Rohbraunkohle mit separater Kohletrocknung

Der Trocknungsbehälter 1 ist mit dem Heizflächenpaket 2 ausgestattet und über Leitung 3 mit Fördereinrichtung 4 mit dem Dampfkessel 5 verbunden. Der Trocknungsbehälter 1 und der Dampfkessel 5 weisen einen eigenen Sattdampfkreislauf 6 auf. Der entstehende Brüden wird durch die Leitung 7 in den Heizwasservorwärmer 8 sowie über den Entspanner 9 und die Brüdenaufbereitung 10 zur Wasserversorgung des Dampfkessels 5 und des Heiznetzes eingesetzt.

### Vorteile der Erfindung

- Durch diese Verschaltung wird eine Reduzierung der CO₂ -Bildung und damit der CO₂-Emission bei ansonsten gleicher Nutzenergiebereitstellung ermöglicht.
- Ein weiterer Vorteil ist die Reduzierung des Additiveinsatzes zur SO₂-Einbindung und damit die Reduzierung des Asche- und Abproduktanfalles.
- Des weiteren besteht die Möglichkeit, das gebildete Brüdenkondensat zur Wasserversorgung der Energieanlage einzusetzen.

### Aufstellung der verwendeten Bezugszeichen

1 Trocknungsbehälter
2 Heizflächenpaket
3 Leitung
4 Fördereinrichtung
5 Dampfkessel
6 Sattdampfkreislauf
7 Leitung
8 Heizwasservorwärmer
9 Entspanner
10 Brüdenaufbereitung
11 Heiznetz

## Patentansprüche

1. Verfahren zur Trocknung wasserhaltiger fester Brennstoffe, insbesondere Rohbraunkohle, in einem Trocknungsbehälter einer Wärme-Dampferzeugungsanlage, wobei der Brüden des Trocknungsbehälters kondensiert, entspannt sowie aufbereitet wird,
**gekennzeichnet dadurch,**
daß der Trocknungsbehälter über einen eigenen Sattdampfkreislauf vom Heizkessel der Dampferzeugungsanlage direkt erhitzt, der entstaubte und unter Mitteldruck stehende Brüden auf eine Wärmeversorgungsschiene gegeben und das Brüdenkondensat nach dessen chemischer Aufbereitung zur Wasserversorgung eines Heizkraftwerkes und/oder eines Heiznetzes eingesetzt wird.

## Claims

1. Method for the drying of solid fuels, in particular raw lignite, which contain water, in a drying oven of a thermal steam generation plant, wherein the exhaust vapors from the drying oven are condensed, expanded and processed,
**characterized in that**
the drying oven is supplied with heat directly from the furnace of the steam generation plant via a separate saturated steam circuit, that the exhaust vapors, cleaned of dust and at medium pressure, are fed into the heating system, and that the exhaust vapor condensate, following chemical treatment, is used to supply water to a heating and power station and/or a heating network.

## Revendications

1. Procédé pour le séchage de combustibles solides et humides, surtout de lignite brut, dans un réservoir de séchage d'une installation de production de vapeur et de chaleur, les buées du réservoir de séchage étant condensées, détendues et traitées,
caractérisé en ce que le réservoir de séchage est chauffé directement par la chaudière de chauffage de l'installation de production de vapeur, par l'intermédiaire d'un circuit spécifique à vapeur saturée, que les buées dépoussiérées et mises sous pression moyenne sont appliquées à un rail d'alimentation en chaleur et que les buées condensées, après avoir subi un traitement chimique, alimentent la distribution d'eau d'une centrale thermique et/ou d'un réseau de chauffage.
